# EUROPEAN PATENT APPLICATION

(11) **EP 2 206 643 A1**
(43) Date of publication of application: **14.07.2010**
(21) Application number: 09150297.1
(22) Date of filing: 09.01.2009
(51) Int. Cl.: B62K 19/40

(54) **Bike battery and control system mounting structure**

(71) Applicant: Taiwan Hodaka Industrial Co., Ltd., Taipei (TW)
(72) Inventor: Cheng, Paul, Tainan County (TW)
(74) Representative: Zapalowicz, Francis

(57) **Abstract**

A bike battery and control system mounting structure is disclosed. A main flame tube (13) is located between head tube (11) and stem (12), having a folder (14) attached to it which enables it to be folded, where a battery (20) and a control system (30) can be placed into the tube from the tube openings at folding location, and the battery and the control system are mounted therein out of sight.

## Description

The present invention generally relates to bike battery and control system mounting structures and more particularly relates to a main frame tube located between head tube and stem, having a folder attached to the main frame tube which enables the tube to be folded, where the battery and the control system can be placed into the tube from the tube openings at folding location, and the battery and the control system are mounted therein out of sight.

Bikes are now provided with electric apparatus. Aside from the demand for a motor to drive the gears, a battery is set up to offer electric power to the motor, and a control system is needed to connect the motor and a control unit at the handle. As regards the mount of prior art batteries and control systems, some are fixed to the bike frame and covered by a shield, while others are placed into the frame tubes, where the tube ends are made deliberately downward, followed by a plastic plug for sealing. Among the above approaches of mounting the battery and the control system, the former protrudes from the bike frame which may debase the looks, and the latter has the frame tube end made downward deliberately which may restrict the overall interconnection of tubes and thus affect the rigidity of the bike frame.
In the light of the aforementioned drawbacks of the mount of the prior art batteries and the control systems, this inventor conceived the idea for the advanced improvement, and eventually the endeavors gave birth to this invention.

The objective of the present invention is to provide a bike battery and control system mounting structure where the battery and the control system are mounted in concealment adequately.
The main traits of the present invention lie in: the main frame tube is provided with a folder in between the head tube and the stem, which enables the frame tube to be folded, where the battery and the control system can be placed into the tube from the tube opening at folding location, and the battery and the control system are mounted therein out of sight.
FIG. 1 is a front elevation of the structure of the exemplified embodiment of the present invention;
FIG. 2 is a front elevation of the folded structure of the exemplified embodiment of the present invention;
FIG. 3 is a partially enlarged view of FIG. 1;
FIG. 4 is a front elevation of the open state of the folder of the exemplified embodiment of the present invention;
FIG. 5 is a top view of the open state of the folder of the exemplified embodiment of the present invention; and
FIG. 6 is a sectional view of A-A of FIG. 1.

To achieve the foregoing objects and function of the present invention, the techniques and structure adopted are described with reference to the following preferred embodiment and the accompanying drawings.

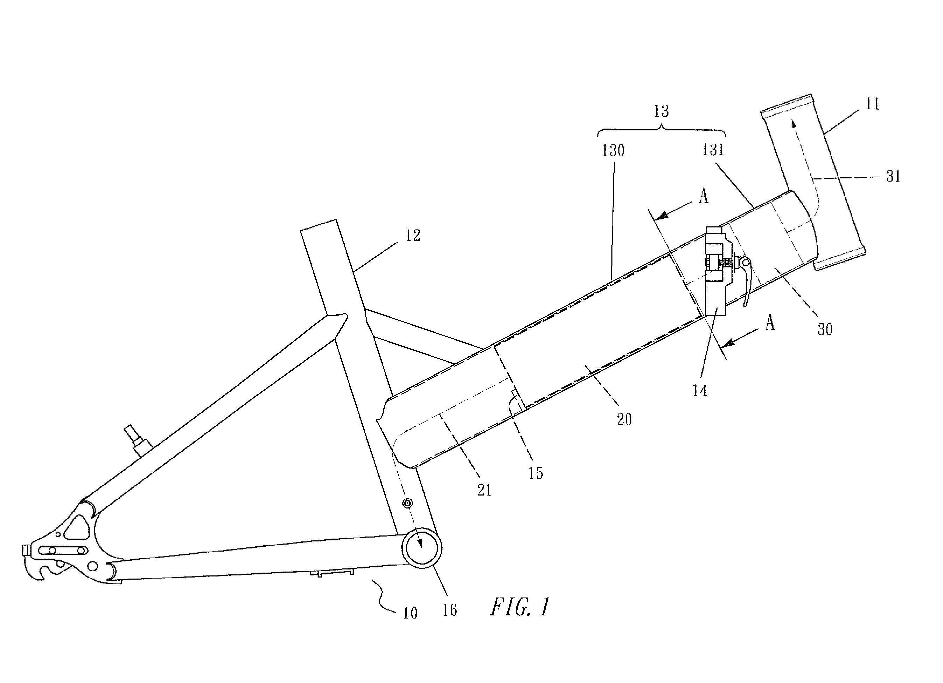

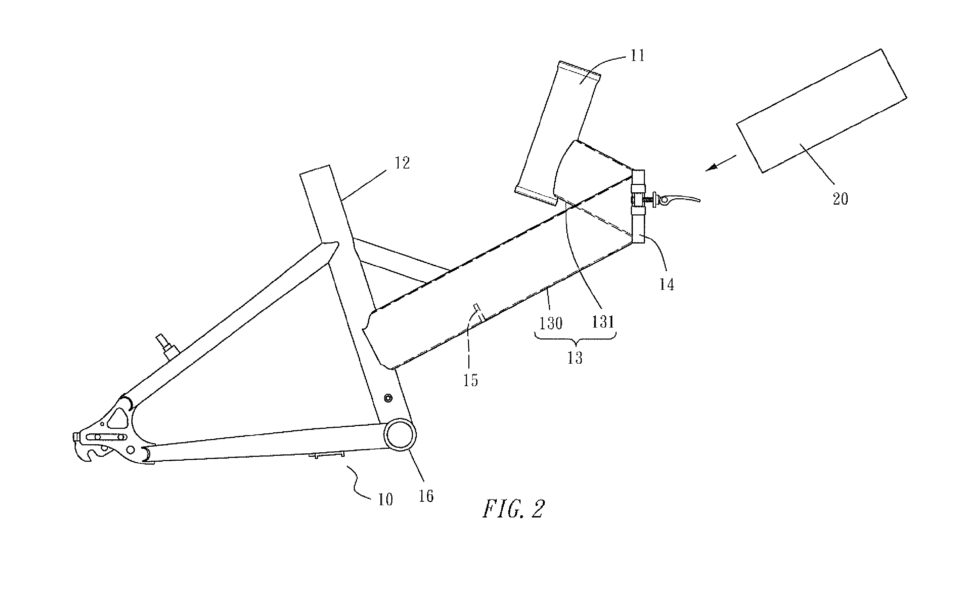

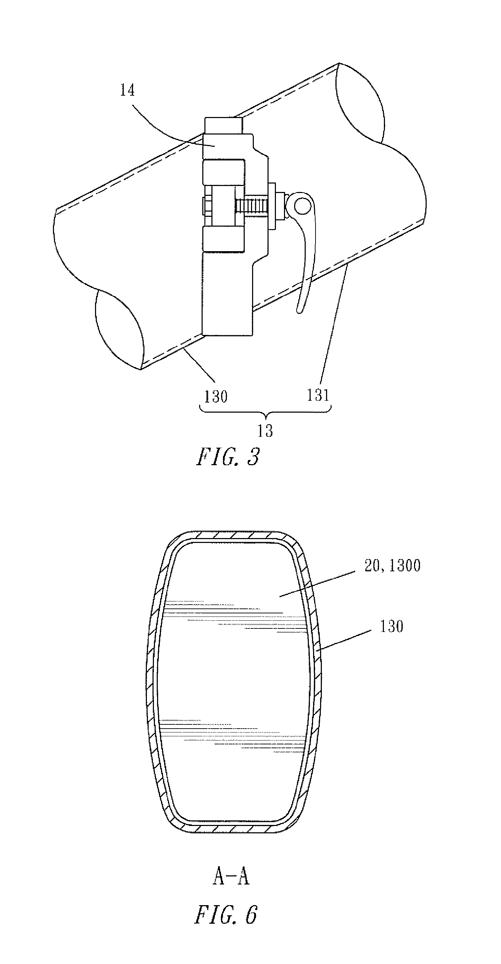

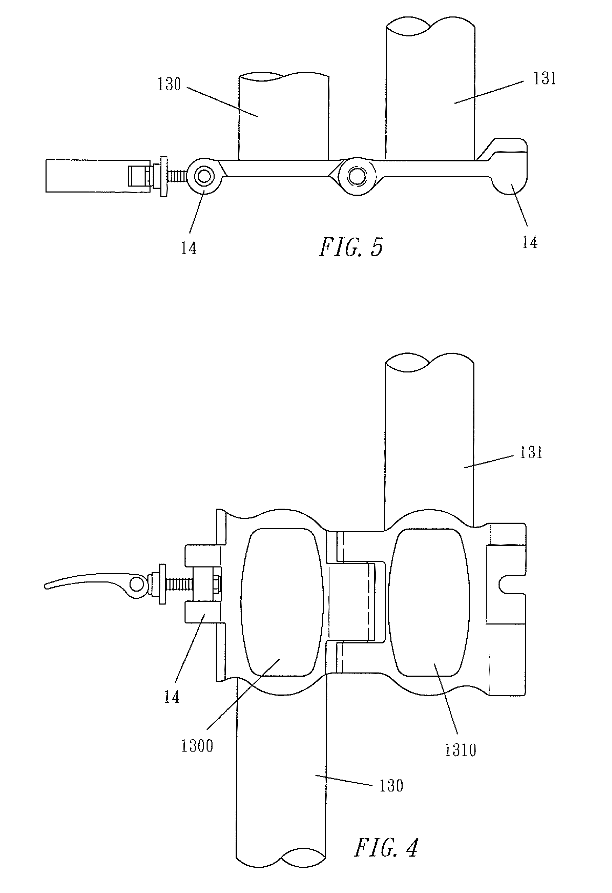

Referring to FIGS. 1 & 2, the present invention is provided with a folder 14 which is attached to the main frame tube 13 located in between head tube 11 and stem 12 of the frame 10, where the folder 14 enables the main frame tube 13 to be folded, shown in FIGS. 2 & 3. The first segment of the main frame tube 130, the portion of the main frame tube 130 between the folder 14 and the stem 12, is longer than the second segment of the main frame tube 131, the portion between the folder 14 and the head tube 11. This enables the first segment of the main frame tube 130 to accommodate the battery 20 (shown in FIGS. 6), where its outer diameter is fitted well with the inner diameter of the main frame tube 13, provided that the folder 14 is open (shown in FIGS. 4 & 5). The battery is being tightly mounted in the first segment of the main frame tube 130 and the battery 20 is further barricaded fixedly by a locking pin 15. The control system 30 (for instance a printed circuit control board) is placed in the second segment of the main frame tube 131 for a mount through the tube opening 1310. Since the battery 20 and the control system 30 are hided in the main frame tube 13, the overall looks wouldn't be influenced. Moreover, the battery 20 is placed in the first segment of the main frame tube 130 and is close to 5-way pipe 16 which nears the attachment of the motor and the gears that enables the power cord 21 of the battery 20 goes through the shortest distance to connect the motor through the first segment of the main frame tube 130; the control system 30 is placed in the second segment of the main frame tube 131, and the power cord 31 of the control system 30 goes through the shortest distance to connect the control unit at the handle through the head tube 11, which simplifies the power control wiring and hides all in the tube.

From aforementioned description, the present invention is provided with a folder 14 attached to the main frame tube 13, which enables the battery 20 and the control system 30 to be placed in the main frame tube 13 that makes them mounted in a complete hiding. Furthermore, the power control wiring is the minimum connected to the motor and the control unit, which substantially boosts the handiness of the wiring and the elegance of the looks, and is no doubt useful and creative than the prior art.

To sum up, the present invention is construed as not only novel but useful and creative, thereby filing the present application herein subject to the patent law.

## Claims

1. A bike battery and control system mounting structure, featuring:
a main frame tube located between head tube and stem, having a folder attached to the main frame tube which enables the tube to be folded, where the battery and the control system can be placed into the main frame tube from the tube opening at folding location, and the battery and the control system are mounted therein out of sight.

2. A bike battery and control system mounting structure as in claim 1 wherein the first segment of the main frame tube, the portion of the main frame tube between the folder and the stem, is longer than the second segment of the main frame tube, the portion of the main frame tube between the folder and the head tube, which enables the first segment of the main frame tube to accommodate the battery from the first tube opening; the control system is placed in the second segment of the main frame tube for a mount through the second tube opening.

3. A bike battery and control system mounting structure as in claim 1 wherein the outer diameter of the battery is fitted well with the inner diameter of the main frame tube, which enables the battery to be tightly mounted in the first segment of the main frame tube and the battery is further barricaded fixedly by a locking pin.

4. A bike battery and control system mounting structure as in claim 2 wherein the outer diameter of the battery is fitted well with the inner diameter of the main frame tube, which enables the battery to be tightly mounted in the first segment of the main frame tube and the battery is further barricaded fixedly by a locking pin.
